# EUROPEAN PATENT APPLICATION

(11) **EP 4 729 382 A1**
(43) Date of publication of application: **22.04.2026**
(21) Application number: 24206724.7
(22) Date of filing: 15.10.2024
(51) Int. Cl.: B60W 30/182, B60W 50/08, B60W 50/029

(54) **CONTROL OF VEHICLE COMBINATIONS**

(71) Applicant: Volvo Truck Corporation, 405 08 Göteborg (SE)
(72) Inventor: LARSSON, Lena, Västra Frölunda (SE); PETTERSSON, Emil, Nol (SE)
(74) Representative: Ström & Gulliksson AB

(57) **Abstract**

A computer system (700) for a vehicle combination (10) comprising a truck (12) and at least one trailer (14a, 14b) comprising processing circuitry (702) is provided. The processing circuitry (702) is configured to: obtain information pertaining to a current truck drive mode (110) from the truck (12), determine a suitable trailer drive mode (120), wherein the suitable trailer drive mode (120) is determined among a plurality of predefined trailer drive modes (121 - 138), wherein the determination is based on the obtained current truck drive mode (110); and set the at least one trailer (14a, 14b) in the determined trailer drive mode (120).

## Description

### TECHNICAL FIELD

The disclosure relates generally to vehicle control. In particular aspects, the disclosure relates to control of vehicle combinations. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The efficient and safe control of vehicle combinations, particularly heavy-duty trucks and trailers, has become increasingly important. Despite advances in automotive technology, several challenges persist in improving performance, safety, and efficiency. With the growing demand for long-haul transport and the need to move volumes of goods over vast distances, the complexity of managing these vehicle combinations has escalated. Despite advances in automotive technology, several challenges persist in improving the performance, safety, and efficiency of truck-trailer combinations. Traditional systems often treat the truck and trailer as separate entities, failing to account for the dynamic interactions between them, leading to reduced performance, increased fuel consumption, reduced stability, and compromised safety. The reliance on manual driver intervention without adequate feedback exacerbates inconsistent performance, especially in challenging conditions.

It is therefore desired to provide systems, methods and other approaches for vehicle management that attempt to resolve or at least mitigate one or more of these issues.

### SUMMARY

According to a first aspect of the disclosure, a computer system for a vehicle combination comprising a truck and at least one trailer comprising processing circuitry configured to: obtain information pertaining to a current truck drive mode from the truck, determine a suitable trailer drive mode, wherein the suitable trailer drive mode is determined among a plurality of predefined trailer drive modes, wherein the determination is based on the obtained current truck drive mode information; and set the at least one trailer in the determined trailer drive mode. The first aspect of the disclosure may seek to address the problem of inefficient coordination between truck and trailer drive modes, resulting in reduced performance and safety. A technical benefit may include improved synchronization between truck and trailer drive modes, leading to enhanced overall vehicle performance and safety.

Optionally in some examples, including in at least one preferred example, the drive modes are one or more of: hill start aid mode, active grip control mode, adaptive cruise control mode, comprises drive mode economy, drive mode standard, drive mode range, drive mode performance, drive mode off-road, I-Roll, I-see, idle speed driving, regenerative braking mode, rocking mode, snow mode or battery performance mode. A technical benefit may include enhanced versatility and adaptability of the trailer drive modes to various driving conditions.

Optionally in some examples, including in at least one preferred example, the processing circuitry is further configured to store historical data of the truck drive mode information and use the historical data in determining the suitable trailer drive mode. A technical benefit may include improved accuracy in determining the appropriate trailer drive mode based on historical data.

Optionally in some examples, including in at least one preferred example, the processing circuitry is further configured to receive driver input, and wherein the determination of a suitable trailer drive mode is further based on the driver input. A technical benefit may include increased user control and customization of the trailer drive mode based on driver preferences.

Optionally in some examples, including in at least one preferred example, the processing circuitry includes a user interface for displaying the current trailer drive mode to the driver. A technical benefit may include enhanced driver awareness and interaction with the trailer drive system.

Optionally in some examples, including in at least one preferred example, the processing circuitry is configured to automatically switch to a default trailer drive mode in case of a communication failure with the truck. A technical benefit may include increased reliability and safety of the trailer drive system in case of communication failures.

Optionally in some examples, including in at least one preferred example, the processing circuitry is further configured to include a manual override option that allows the driver to manually set the trailer drive mode. A technical benefit may include increased flexibility and control for the driver in selecting the trailer drive mode.

Optionally in some examples, including in at least one preferred example, the processing circuitry is further configured to receive information pertaining to the load weight of the trailer, and wherein the determination of a suitable trailer drive mode is further based on said information. A technical benefit may include optimized trailer performance based on the load weight.

Optionally in some examples, including in at least one preferred example, the processing circuitry is further configured to receive information pertaining to the number of trailers in the vehicle combination, and wherein the determination of a suitable trailer drive mode is further based on said information.

Optionally in some examples, including in at least one preferred example, wherein the processing circuitry is further configured to receive information pertaining to vehicle dynamics data of the truck, trailer or a combination of both, and wherein the determination of a suitable trailer drive mode is further based on said information. A technical benefit may include improved stability and control of the trailer based on real-time vehicle dynamics data.

Optionally in some examples, including in at least one preferred example, wherein the processing circuitry is further configured to adjust the suspension system of the trailer based on the determined trailer drive mode. A technical benefit may include enhanced ride comfort and stability of the trailer based on the selected drive mode.

Optionally in some examples, including in at least one preferred example, wherein the processing circuitry is configured to receive predictive maintenance data of the at least one trailer, and wherein the determination of a suitable trailer drive mode is further based on predictive maintenance data. A technical benefit may include extended lifespan and reliability of the trailer components based on predictive maintenance data.

According to a second aspect of the disclosure, a vehicle combination comprising a truck and a trailer is provided, further comprising the computer system of the first aspect. The second aspect of the disclosure may seek to address the problem of inefficient coordination between truck and trailer drive modes, resulting in suboptimal performance and safety. A technical benefit may include improved synchronization between truck and trailer drive modes, leading to enhanced overall vehicle performance and safety.

According to a third aspect of the disclosure, a computer-implemented method comprising: obtaining, by processing circuitry of a computer system, information pertaining to a current truck drive mode from a truck, determining, by the processing circuitry, a suitable trailer drive mode, wherein the suitable trailer drive mode is determined among a plurality of predefined trailer drive modes, wherein the determination is based on the obtained current truck drive mode; and setting, by the processing circuitry, a trailer in the determined trailer drive mode.

According to a fourth aspect of the disclosure, a computer program product comprising program code for performing, when executed by the processing circuitry, the method of the third aspect. The fourth aspect of the disclosure may seek to enable new vehicle combinations and/or legacy vehicle combinations to be conveniently configured, by software installation/update, to address the problem of inefficient coordination between truck and trailer drive modes, resulting in suboptimal performance and safety. A technical benefit may include improved synchronization between truck and trailer drive modes, leading to enhanced overall vehicle performance and safety.

According to a fifth aspect of the disclosure, a non-transitory computer-readable storage medium comprising instructions, which when executed by the processing circuitry, cause the processing circuitry to perform the method of the third aspect. The fifth aspect of the disclosure may seek to enable new vehicle combinations and/or legacy vehicle combinations to be conveniently configured, by software installation/update, to address the problem of inefficient coordination between truck and trailer drive modes, resulting in suboptimal performance and safety. A technical benefit may include improved synchronization between truck and trailer drive modes, leading to enhanced overall vehicle performance and safety.

According to a sixth aspect of the disclosure, a trailer is provided comprising the computer system of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIGS. 1A-B** are exemplary views of a vehicle combination according to examples.
**FIG. 2** is an exemplary system diagram of functionality of a computer system.
**FIG. 3** is an exemplary system diagram of functionality of a computer system.
**FIGS. 4A-D** are exemplary system diagrams of functionality of a computer system.
**FIG. 5** is a flow chart of an exemplary method according to an example.
**FIG. 6** is a flow chart of an exemplary method according to an example.
**FIG. 7** is another view of **FIG. 2****,** according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosed technology pertains to a computer system for a trailer that is connected to a truck. This computer system is designed to address the problem of inefficient coordination between truck and trailer drive modes, which can lead to reduced performance and safety issues. The core issue lies in the lack of real-time synchronization and adaptability between the truck's drive mode and the trailer's operational settings, resulting in inefficiencies such as increased fuel consumption, reduced stability, and poor handling under various driving conditions. The disclosed computer system for a trailer connected to a truck improves the coordination between truck and trailer drive modes. By leveraging real-time data and offering a wide range of drive modes, it enhances vehicle performance, safety, and efficiency, making it a superior solution compared to the prior art.

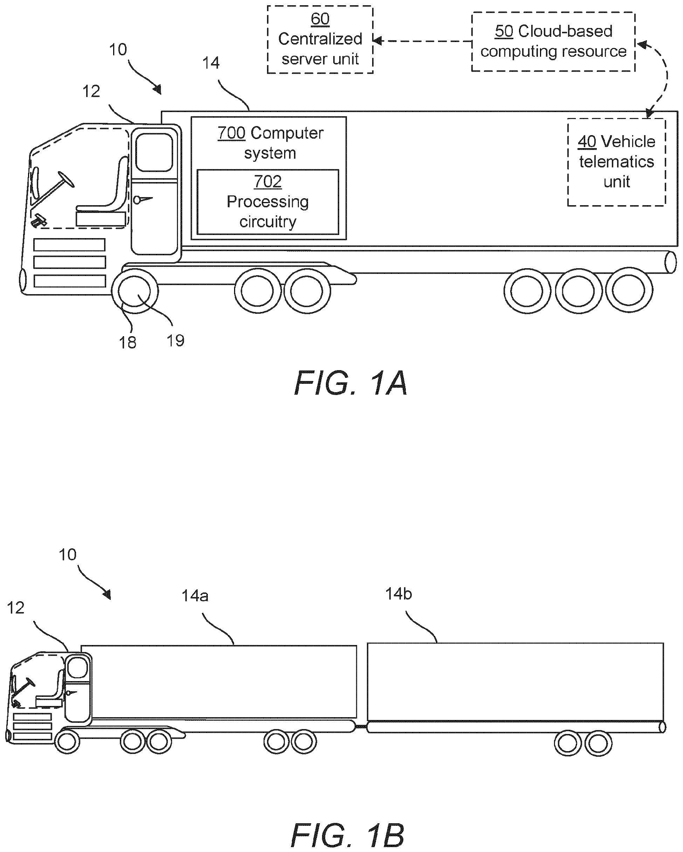

**FIG. 1A** is an exemplary view of a vehicle combination **10** comprising a truck **12** (or truck unit **12**) and a trailer **14** (or trailer unit **14**) according to an example. The truck **12** could also be referred to as a tractor or primary truck. In this particular example the vehicle combination **10** comprises a truck **12** which is arranged to tow a trailer **14.** The vehicle combination **10** may of course comprise additional vehicle units (where either one of the trailer or the truck could be seen as a vehicle unit), such as one or more dolly units and more than one trailer unit. Although the vehicle combination **10** is illustrated as a truck/trailer combination, it should be realized that other types of vehicles and/or vehicle combinations may be equally considered for the purpose of the herein described method such as busses, construction equipment, trucks, etc. As a non-limiting example, applicable vehicles may be a dump truck, transfer dump truck, tipper truck, side dump truck, roll-off truck, live bottom trailer, or haul trucks. Although not explicitly visualized in the figure, the skilled person will appreciate that the vehicle comprises all necessary vehicle units and associated functionality such that it may operate as the skilled person would expect of a vehicle.

The vehicle combination **10** is supported by wheels **19,** where each wheel comprises a tire **18.** The truck **12** has front wheels which are normally steered, and rear wheels of which at least one pair are driven wheels. Generally, the rear wheels of the truck **12** may be mounted on tag or pusher axles. A tag axle is where the rear-most drive axle is non-powered, also referred to as a free-rolling or dead axle. A pusher axle is where the forward-most drive axle is not powered. The trailer **14** is supported on trailer wheels. Trailers with driven wheels, and even a steered axle, are also possible.

In some examples, at least one trailer **14** comprises one or more sensors. The one or more sensors may be selected from the group consisting of a velocity sensor, a wheel speed sensor, an accelerometer, and a coupler angle sensor, wherein a computer system (such as the system **700** referred to herein) is communicatively coupled to the one or more sensors and configured to receive input from the one or more sensors.

The vehicle combination **10** further comprises a computer system **700** comprising processing circuitry **702.** The computer system **700** may comprise a vehicle control unit (VCU) arranged to control various functions of the vehicle combination **10.** For instance, the VCU may be arranged to perform a vehicle motion management (VMM) function comprising control of wheel slip, vehicle unit stability, and so on. The trailer **14** may also comprise a VCU, which then controls one or more functions of the trailer **14.** The truck **12** may also comprise a VCU, which then controls one or more functions of the truck 12. The VCU or VCUs may be communicatively coupled, e.g., via wireless link, to a remote server. This remote server may be arranged to perform various configurations of the ECU, and to provide various forms of data to the ECU, such as for example providing data regarding the make and type of tires mounted on the vehicle combination **10.** The trailer **14** optionally also comprises one or more electronic control units (ECUs), which may be adapted to control one or more functionalities of the trailer **14.**

The computer system **700** may be communicatively coupled, e.g., via wireless link, to a remote server **60.** This remote server may also be referred to as a centralized server unit **60.**

The computer system **700** may be configured to obtain information from different kinds of sensors or services. For example, the vehicle combination **10** may be in communication with a weather service and/or a navigation service. In one example, the computer system **700** is in communication with vehicle state sensors such as radar sensors, sensors based on LiDAR and/or visions based sensors such as camera sensors and infrared detectors.

The vehicle combination **10** may comprise a vehicle telematics unit **40.** The vehicle telematics unit **40** is configured for obtaining data from the vehicle combination **10,** such as from the computer system **700,** and communicate said data wirelessly to an external service. The results may be transmitted by the vehicle telematics unit **40** to a cloud-based computing resource **50** during an ongoing operation of the vehicle combination **10,** i.e., in online mode. Alternatively, or additionally, control signal responses may be sent as raw data to the cloud-based computing resource **50,** and subsequent obtaining, comparing and determining of information may be performed by the cloud-based computing resource **50.** To this end, the determination steps may be carried out remote from the vehicle combination **10.** The operation of the vehicle combination **10** may be a particular usage of the vehicle **10** combination, such as a start-up at a first location, a drive to a second location, and a shutdown at said second location. Such online data transmission may be realized in at least near real-time, where at least near real-time is to be interpreted as involving some minor delay caused by, for instance, network connectivity, latencies, or other similar reasons. In some examples, batch processing and transfer of the data may be realized. In this particular example, the vehicle telematics unit **40** is configured to be in communication with the cloud-based computing resource **50.** The communication may be based on any known short-range or long-range standards or protocols known in the art. The following list of examples are some exemplary network/radio communication standards or protocols that may be employed by the vehicle telematics unit **40** and the cloud-based computing resource **50:** HTTP(S), TCP/IP, UDP, FTP, SMTP, DNS, DHCP, SSH, POP3, SCP, NFS, SFTP, ICMP, ARP, RTP, RTCP IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, any form of proximity-based device-to-device radio communication, LTE Direct, W-CDMA/HSPA, GSM, UTRAN, LTE, IPv4, IPv6, 6LoWPAN, IrDA, or 5GNR.

The cloud-based computing resource **50** may be implemented using any commonly known cloud-computing platform technologies, such as e.g. Amazon Web Services, Google Cloud Platform, Microsoft Azure, DigitalOcean, Oracle Cloud Infrastructure, IBM Bluemix or Alibaba Cloud. The cloud-based computing resource **50** may be included in a distributed cloud network that is widely and publically available, or alternatively limited to an enterprise. The cloud-based computing resource **50** may comprise a cloud-based storage unit. The cloud-based storage unit may be included with or external to the cloud-based computing resource **50.** Connection to the cloud-based storage unit may be established using DBaaS (Database-as-a-service). For instance, the cloud-based storage unit may be deployed as a SQL data model such as MySQL, PostgreSQL or Oracle RDBMS. Alternatively, deployments based on NoSQL data models such as MongoDB, Amazon DynamoDB, Hadoop or Apache Cassandra may be used. DBaaS technologies are typically included as a service in the associated cloud-based computing resource **50.**

The cloud-based computing resource **50** may be in further communication with a centralized server unit **60.** Communication between the cloud-based computing resource **50** and the centralized server unit **60** may be realized by any of the communication standards or protocols as mentioned above with respect to the cloud-based computing resource **50** and the vehicle telematics unit **40.** The centralized server unit **60** may be configured for collecting and analyzing data from a plurality of vehicle combinations, and subsequently provide new and/or updated data to said plurality of vehicle combinations based on various factors.

In some examples, determination processes described herein are not necessarily transferred from the vehicle telematics unit **40** to the centralized server unit **60** during an ongoing operation of the vehicle **10.** Instead, determination processes may be transferred in an offline fashion after the vehicle **10** has finished an operation. Hence, the vehicle telematics unit **40** is configured to store the identification results during the operation, but the transfer is not effected until after said operation is completed. This may be realized in certain situations, such as at vehicle workshops or other vehicle maintenance locations.

**FIG. 1B** is an exemplary view of a vehicle combination **10** comprising a truck **12,** and two trailers **14a, 14b.** The vehicle combination **10** may be referred to as a road train, or multi-trailer combination. The first trailer **14a** is directly hitched to the truck **12,** while subsequent trailer(s) **14b** are connected in tandem to each preceding trailer, forming a linked chain of trailers, the chain in this particular example involving two trailers **14a, 14b.** This arrangement allows the vehicle combination **10** to transport a larger volumes of cargo compared to a single-trailer setup. Each trailer **14a, 14b** in the vehicle combination **10** may feature a dolly or other attachment mechanism to facilitate the attachment to the trailer **14a, 14b** ahead. A dolly is a wheeled frame with a coupling device.

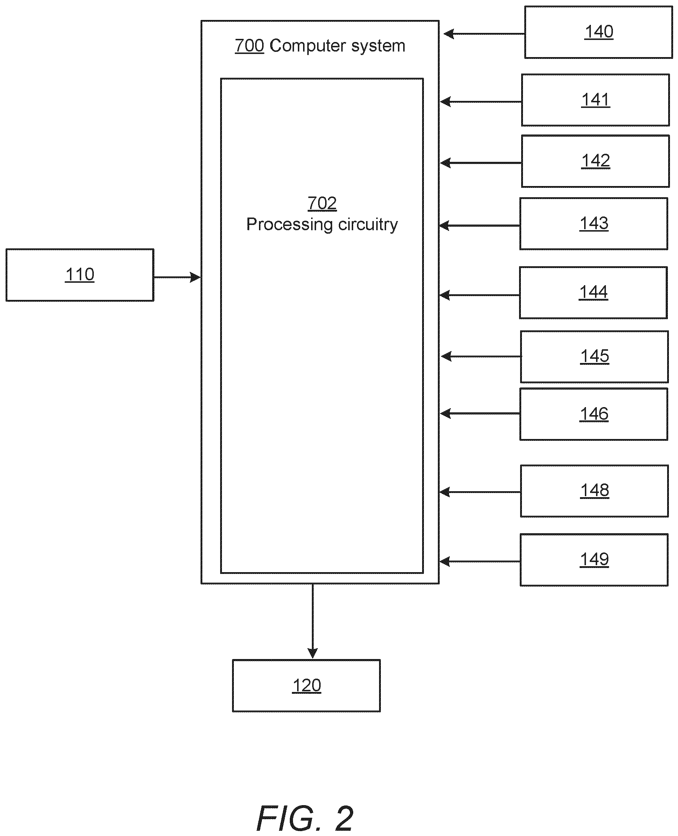

**FIG. 2** is a schematic illustration of a computer system **700** according to one example. As illustrated, the computer system **700** may receive input relating to different features where the aim is to determine a suitable trailer drive mode **120** for the at least one trailer **14.** The computer system **700** is configured to receive information of the current truck drive mode **110.** The information pertaining to the current truck drive **110** mode comprises the drive mode the truck **12** is currently set to.

The computer system **700** comprises processing circuitry **702** that is configured to obtain information pertaining to the current truck drive mode **110** from the truck **12.** The computer system **700** then determines a suitable trailer drive mode **120** from a plurality of predefined trailer drive modes. This determination is at least based on the obtained current truck drive mode information. This ensures that the trailer's **14** operational settings are aligned with those of the truck **12.** Once the suitable trailer drive mode **120** is determined, the system **700** sets the trailer **14** in this mode, thereby achieving real-time synchronization between the drive modes of the truck **12** and trailer **14.**

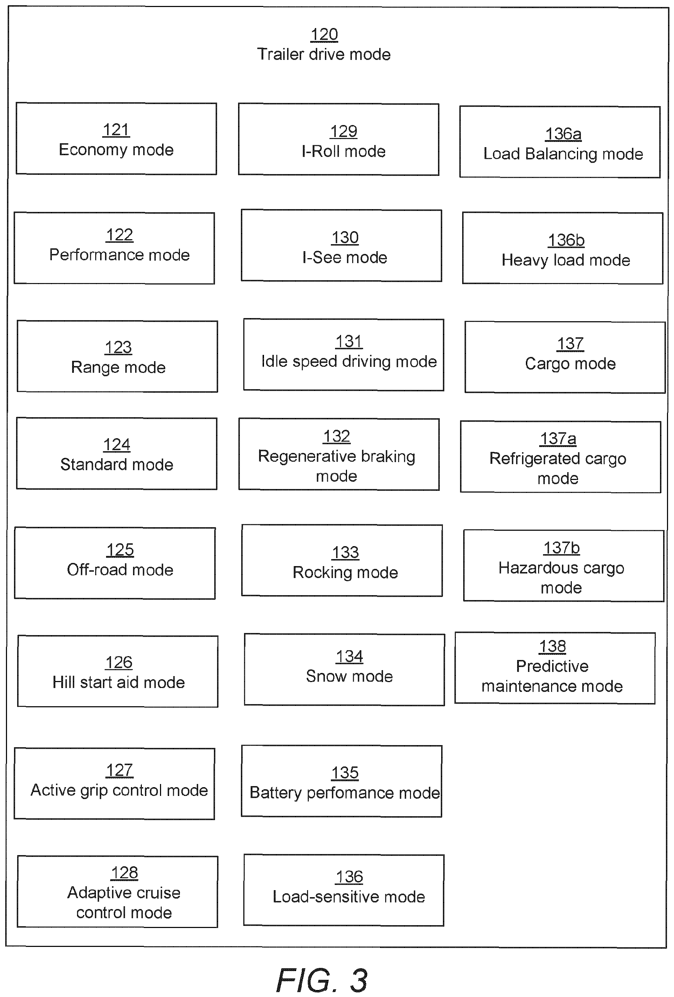

One of the primary advantages of this system **700** is its ability to dynamically adapt the trailer's drive mode **120** based on real-time data from the truck **14.** This includes various drive modes, as will be described more in detail with reference to **FIG. 3****.** By offering such versatility, the system **700** ensures that the trailer can handle a wide range of driving conditions effectively.

In some examples, as shown in **FIG. 2****,** the system **700** uses additional information to further enhance the determination of the suitable trailer drive mode **120.**

In one example, the computer system **700** is configured to determine the suitable trailer drive mode **120** based on stored historical data **140** of the truck drive mode information. The information is preferably stored in a memory, either locally in the vehicle combination or in a cloud storage.

In one example, the computer system **700** is configured to determine the suitable trailer drive mode **120** based on received driver input **142.** The driver input **142** may be received from an interface of the truck **12.** The driver input may be received from an interface in the truck **14,** which could be a touchscreen display, physical buttons, or a voice-activated control system. This interface allows the driver to manually select, adjust or initiate a request for the trailer's drive mode **120.** In some examples, the suitable trailer drive mode **120** is based on both the current truck drive mode **110** and the driver input **142.** This may be beneficial if the driver has specific demands of the journey or personal driving preferences that the computer system **700** should take into account. In some examples, the computer system **700** determines two suitable trailer driving modes, and the driver could then choose their preferred mode.

In one example, the computer system **700** is configured to determine the suitable trailer drive mode **120** based on battery status **141** of the at least one trailer **14a, 14b.**

In one example, the computer system **700** is configured to determine the suitable trailer drive mode **120** based on received information pertaining to the load weight **144** of the at least one trailer **14** and/or the truck **12.** This functionality allows the system to improve the vehicle's performance by adjusting the drive mode according to the weight and distribution of the cargo, thereby enhancing safety, stability, and fuel efficiency.

The load weight information **144** can be obtained through various sensors and data sources integrated within the vehicle combination **10.** For instance, the trailer **14** and truck **12** could be equipped with load sensors on each axle, providing real-time data on the weight distribution across different sections of the vehicle combination **10.** These sensors can measure the vertical load on each axle, allowing the system **700** to calculate the total load weight and its distribution. The load weight information **144** may also relate to the distribution of the load on the trailer **14.** For example, some possible trailer drive modes may be deemed unsuitable for some weights and/or weight distributions.

In one example, the computer system **700** is configured to receive information pertaining to the cargo **145** on the trailer **14.** The information may include information of the type of cargo, such as hazardous cargo or refrigerated cargo. For example, some possible trailer drive modes may be deemed unsuitable for some kinds of cargo.

In one example, the computer system **700** is configured to receive information pertaining to vehicle dynamics data **149** of the truck **12,** trailer(s) **14** or a combination of both. Vehicle dynamics data may encompasses a variety of real-time data points and parameters that describe the behavior and performance of the vehicle under different driving conditions. This data is important for optimizing the coordination between the truck **12** and trailer **14,** thereby enhancing safety, stability, and overall efficiency. Vehicle dynamics data may for example include vehicle speed and/or acceleration. The current speed of the truck **12** and trailer **14** influences decisions on braking, acceleration, and adaptive cruise control to name a few examples. Additionally, data on how quickly the vehicle combination **10** is accelerating or decelerating is useful for stability control and predictive maintenance. Vehicle dynamics data may for example include load distribution. Information on the weight distribution across different axles of the truck and trailer aids in managing load balance and preventing overloading. Real-time data on any movement or shifting of the cargo within the trailer can affect the vehicle combination's **10** center of gravity and stability.

Yet further examples of vehicle dynamics data **149** relate to braking performance data, including brake force distribution and brake wear. Steering dynamics, measured through steering angle and yaw rate, are important for assessing vehicle direction and making necessary adjustments to trailer alignment, thereby preventing rollovers and enhancing stability. Further examples of vehicle dynamics data are related to tire conditions, including tire pressure and temperature.

Yet further examples of vehicle dynamics data **149** relate to traction and grip metrics, such as wheel slip and grip levels. This data is useful for adjusting drive modes like snow mode or off-road mode to maintain traction and control. Environmental factors, including road and weather conditions, also play a role in vehicle dynamics. Real-time information on these conditions can influence drive mode selection and traction control, ensuring the vehicle adapts effectively to changing environments. One more example of vehicle dynamics data relates to vehicle orientation data, such as inclination angles and G-forces.

In one example, the computer system **700** is configured to receive information pertaining to the number of trailers **146** in the vehicle combination. The number of trailers **14** may vary, and may for example be single trailer, a double trailer (or tandem trailer), a triple trailer or a road train comprising a plurality of trailers. A road train may comprise a high number of trailers, such as for example four or more trailers **14.**

In one example, the computer system **700** is configured to receive information pertaining to the length of the vehicle combination **143.**

In one example, the computer system **700** is configured to receive predictive maintenance data **148** that relates to the trailer **14,** as a whole or parts thereof. Predictive maintenance data **148** refers to a variety of information that helps anticipate and prevent potential mechanical issues before they lead to significant problems or failures. This data **148** can encompass a broad spectrum of parameters and insights, all aimed at optimizing the maintenance schedule and extending the lifespan of various components. The information **148** may be used to help determining a suitable trailer drive mode that takes the identified weaknesses into account. For example, if the predictive maintenance data **148** relates to the fact that the tires needs maintenance; this information can be used to determine a more suitable trailer drive mode that accounts for the wear of the tires.

The computer system may **700** further be configured to display the trailer drive mode **120** to the driver. The computer system **700** may further be configured to display the current truck drive mode **110** to the driver. The computer system **700** may further be configured to send a notification to the truck **12** when the trailer drive mode **120** is set. The notification may be sent to the control module of the truck **12** and/or to the driver of the truck **12.** This functionality ensures that the driver is fully aware of the current operational status of the trailer, thereby enhancing safety, coordination, and overall driving experience. This notification can be delivered through various means, such as an in-cab display or an auditory alert. In scenarios where the system sets a mode that requires the driver to be more cautious, such as "Heavy Load Mode" or "Snow Mode," the notification can include additional information or recommendations. For instance, a notification like, "Trailer set to Heavy Load Mode. Adjust driving speed accordingly," provides actionable advice to the driver, helping them maintain control and safety under the new conditions.

The computer system **700** may further be configured to automatically switch to a default trailer drive mode **120** in case of a communication failure with the truck **12.** The computer system may further be configured to include a manual override option that allows the driver to manually set the trailer drive mode **120.**

**FIG. 3** is a schematic illustration of different drive modes **120** that the truck **12** and/or trailer **14** can be arranged/set in. Although a plurality of drive modes will be described, it should be noted that the inventive aspects are applicable to other drive modes as well.

In one example, the drive mode is an economy mode **121.** This mode improves the trailer's performance to increase fuel efficiency. It adjusts various parameters such as throttle response and transmission settings to reduce fuel consumption during long-distance travel.

In one example, the drive mode is a performance mode **122.** This mode enhances the trailer's responsiveness and power delivery, providing a more dynamic driving experience. It is suitable for situations requiring quick acceleration and high-performance handling.

In one example, the drive mode is a range mode **123.** This mode prioritizes extending the driving range of the vehicle combination. It adjusts the trailer's performance to conserve energy, making it advantageous for long-haul journeys where fuel stops are infrequent.

In one example, the drive mode is a standard mode **124.** This is a default drive mode that balances performance and fuel efficiency. It is suitable for everyday driving conditions, providing a blend of comfort and efficiency.

In one example, the drive mode is an off-road mode **125.** This mode adjusts the trailer's settings to handle rough terrain and unpaved roads, enhancing traction, ground clearance, and shock absorption to navigate challenging conditions.

In one example, the drive mode is a hill start aid mode **126.** This mode assists the driver when starting the vehicle on an incline. This may for example be done by temporarily holding the brakes to prevent the trailer from rolling backward as the driver transitions from the brake pedal to the accelerator.

In one example, the drive mode is an active grip control mode **127.** This mode enhances traction by adjusting the power distribution between the truck and trailer wheels, particularly useful on slippery or uneven surfaces to maintain stability and control.

In one example, the drive mode is an adaptive cruise control mode **128.** This mode automatically adjusts the trailer's speed to maintain a safe following distance from the vehicle ahead, working in conjunction with the truck's adaptive cruise control system for synchronized speed adjustments.

In one example, the drive mode is an I-roll mode **129.** This mode allows the trailer to coast in neutral gear when descending slopes, reducing fuel consumption and engine wear by leveraging gravitational force to maintain momentum without engine braking.

In one example, the drive mode is an I-see mode **130.** This mode uses GPS data and topographical information to predict upcoming road conditions, adjusting the trailer's performance in advance to improve fuel efficiency and driving comfort based on the terrain.

In one example, the drive mode is an idle speed driving **131.** This mode allows the vehicle combination to move at a slow, constant speed without pressing the accelerator, useful in heavy traffic or during precise maneuvers in confined spaces.

In one example, the drive mode is a regenerative braking mode **132.** This mode recovers energy during braking and deceleration, converting it into electrical energy to recharge the trailer's battery, enhancing energy efficiency and extending the driving range.

In one example, the drive mode is a rocking mode **133.** This mode helps the vehicle combination free itself when stuck in mud, sand, or snow by engaging a back-and-forth rocking motion to build momentum and gain traction.

In one example, the drive mode is a snow mode **134.** This mode improves the trailer's traction and stability in snowy or icy conditions by adjusting power distribution and braking to prevent wheel spin and skidding.

In one example, the drive mode is a battery performance mode **135.** This mode increases the performance and longevity of the trailer's battery by improving energy usage and charging cycles to ensure efficient operation over extended periods.

In one example, the drive mode is a load-sensitive mode **136.** This mode adjusts the trailer's performance based on the load weight, improving stability and handling to ensure safe and efficient transport of varying cargo weights. The mode relating to weight may also be referred to as a load balancing mode **136a** if the load of the trailer is unevenly distributed. In this mode, the system **700** can make real-time adjustments to the suspension system to level the trailer, ensuring that the weight is evenly spread across all axles. Another example with a drive mode relating to weight is in the case of a heavy load, the system may choose a heavy load mode **136b,** which adjusts the suspension settings and braking force to ensure stability and control. This mode could also increase the power distribution between the truck and trailer to prevent strain on the drivetrain and improve fuel efficiency.

The drive mode could also be a mode relating to the cargo being transported, such as a cargo mode **137.** The cargo mode could for example be a refrigerated cargo mode **137a.** This mode ensures that the refrigeration units operate efficiently while balancing the power needs of the trailer and the truck. Similarly, for hazardous materials, a hazardous cargo mode **137b** could be activated to enhance safety features, such as more sensitive braking and stability controls, to prevent any risk of spillage or accidents.

In one example, the drive mode is a predictive maintenance mode **138.** This mode uses predictive maintenance data to adjust the trailer's drive mode, aiming to extend the lifespan of trailer components and prevent unscheduled maintenance.

Each of these drive modes provides specific functionalities that enhance the trailer's performance and safety under various driving conditions. By leveraging real-time data, the disclosed technology ensures improved performance, fuel efficiency, and stability, making it a versatile and superior solution in the field of heavy-duty vehicle control systems.

The above drive modes **120** are primarily described as trailer drive modes. However, the described drive modes in **FIG. 3** could also be the truck drive mode.

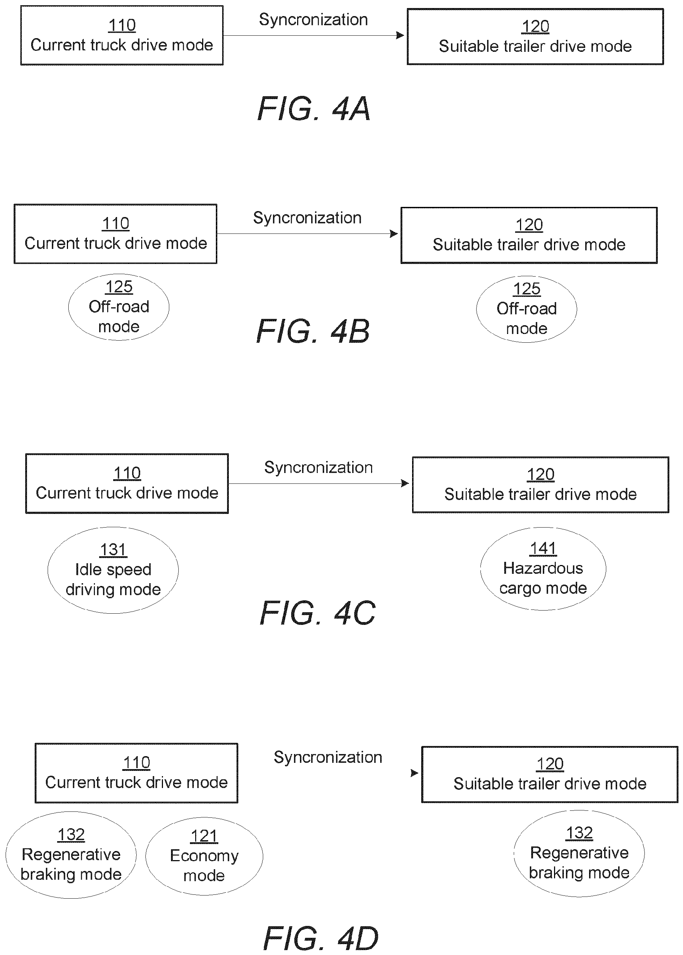

**FIGs. 4A-D** show illustrative drawings of the synchronization between the truck **12** and the at least one trailer **14a, 14b.** As shown in **FIG. 4A****,** the current truck mode **110** of the truck is used as input in order to determine a suitable trailer drive mode **120** for the trailer **14.** The drive mode is considered suitable when it is in synchronization with the current truck drive mode **110.**

As shown in **FIG. 4B****,** synchronization may imply that the same drive mode is used both for the truck and for the trailer. In this example, the current truck drive mode **110** is an off-road mode **125.** The computer system **700** determines that a suitable trailer drive mode **120** is an off-road mode also for the trailer **14.**

In another example, as shown in **FIG. 4C****,** the synchronization may imply that different drive modes are used for the truck **12** and for the trailer **14.** In this example, the current truck drive mode **110** is an idle speed driving mode **131.** The computer system **700** determines that a suitable trailer drive mode **120** is a hazardous cargo mode **141** for the trailer.

In another example, as shown in **FIG. 4D****,** the synchronization may imply that the drive modes used for the truck **12** and for the trailer **14** a partly overlapping. In this example, the current truck drive mode **110** is both regenerative braking mode **132** and economy mode **121.** The computer system **700** determines that a suitable trailer drive mode **120** is a regenerative braking mode **132** for the trailer **14.**

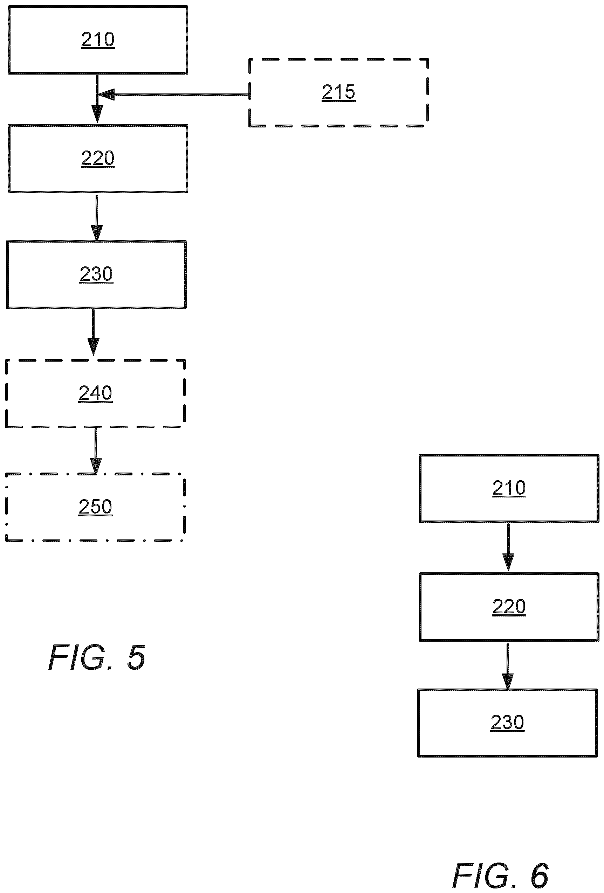

**FIG. 5** is a flow chart of a method according to an example. The method comprises obtaining **210** information pertaining to a current truck drive mode **110** from a truck **12.** The current truck drive mode may for example be any of the drive modes discussed in relation to **FIG. 3****.** The method further comprises determining **220** a suitable trailer drive mode **120.** The suitable trailer drive mode **120** is determined among a plurality of predefined trailer drive modes **121 - 137.** The determination is based on the obtained current truck drive mode **110.** The determination may be based on synchronizing the current truck drive mode **110** with the trailer drive mode **120.** In other words, the determination comprises a synchronization process between the current truck drive mode and the trailer drive mode **120.**

The method further comprises setting **230** a trailer **14a, 14b** in the determined trailer drive mode **120.** The term setting should be interpret to include transmitting instructions to the trailer. In one example, the method comprises adjusting the suspension system of the trailer **14a, 14b** based on the determined trailer drive mode **120.**

In one example, the method further comprises obtaining **215** additional input that is used to determine the suitable trailer drive mode. The additional input may be one or more of driver input **142,** battery status **141** of the at least one trailer **14a, 14b,** load weight **144** of the at least one trailer **14** and/or the truck **12,** information pertaining to the cargo **145** on the trailer **14,** information pertaining to the cargo **145,** information pertaining to the number of trailers **146** in the vehicle combination, predictive maintenance data **148** that relates to the trailer **14,** as a whole or parts thereof, information pertaining to vehicle dynamics data **149** of the truck **12,** trailer(s) **14** or a combination of both, or stored historical data **140** of the truck drive mode.

In one example, the method further comprises displaying **240** the trailer drive mode and possibly also the truck drive mode to the driver.

In one example, the method further comprises transmitting **250** a notification to the truck **12** when the trailer drive mode **120** is set. The notification may be transmitted to a computer system of the truck, and/or to the driver of the truck.

**FIG. 6** is a flow chart of a method according to an example. The method comprises obtaining **210,** by processing circuitry of a computer system, information pertaining to a current truck drive mode **110** from a truck **12,** determining **220,** by the processing circuitry, a suitable trailer drive mode **120,** wherein the suitable trailer drive mode **120** is determined among a plurality of predefined trailer drive modes **121 - 137,** wherein the determination is based on the obtained current truck drive mode **110,** and setting **230,** by the processing circuitry, a trailer **14a, 14b** in the determined trailer drive mode **120.**

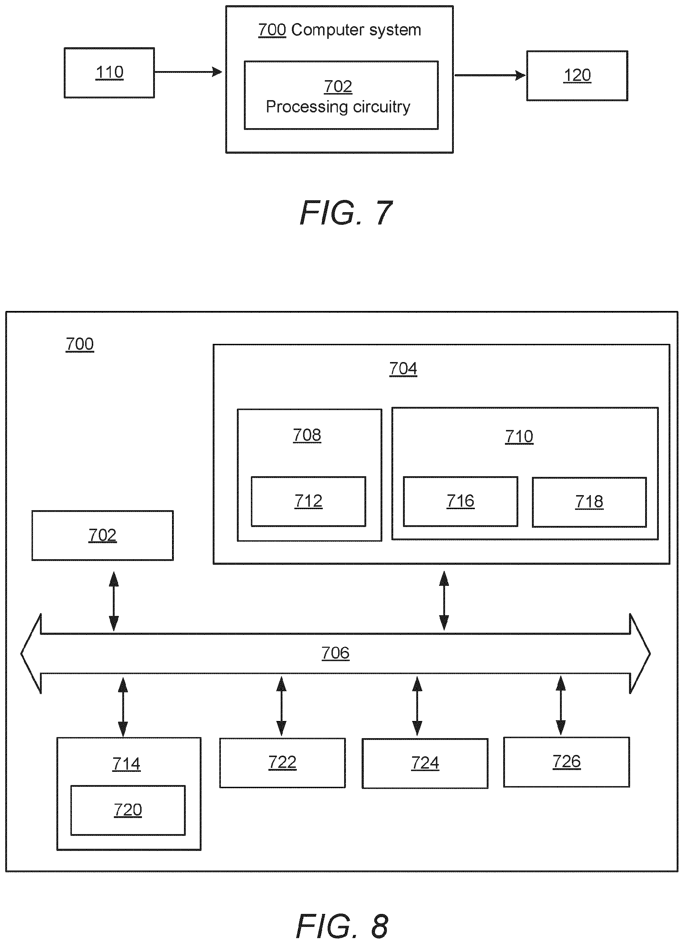

**FIG. 7** is another view of **FIG. 2****,** according to an example. A computer system **700** for a vehicle combination **10** comprising a truck **12** and at least one trailer **14** is shown. The computer system **700** comprises processing circuitry **702** configured to obtain information pertaining to a current truck drive mode **110** from the truck **12,** determine a suitable trailer drive mode **120,** wherein the suitable trailer drive mode **120** is determined among a plurality of predefined trailer drive modes **121 - 137,** wherein the determination is based on the obtained current truck drive mode **110** and set the at least one trailer **14a, 14b** in the determined trailer drive mode **120.**

**FIG. 8** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702**may include any number of hardware components for conducting data or signal processing or for executing computer code stored in memory **704.** The processing circuitry **702**may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system for a vehicle combination comprising a truck and at least one trailer comprising processing circuitry configured to: obtain information pertaining to a current truck drive mode from the truck, determine a suitable trailer drive mode, wherein the suitable trailer drive mode is determined among a plurality of predefined trailer drive modes, wherein the determination is based on the obtained current truck drive mode; and set the at least one trailer in the determined trailer drive mode.

Example 2: The computer system according to Example 1, where the drive modes are one or more of: economy mode, performance mode, range mode, standard mode, off-road mode, hill-start aid mode, active grip control mode, adaptive cruise control mode, I-roll mode, I-see mode, idle speed driving mode, regenerative braking mode, rocking mode, snow mode, battery performance mode, load-sensitive mode, load balancing mode, heavy load mode, cargo mode, refrigerated cargo mode, hazardous cargo mode, and predictive maintenance mode.

Example 3: The computer system according to Example 1 or 2, wherein the processing circuitry is further configured to store historical data of the truck drive mode information and use the historical data in determining the suitable trailer drive mode.

Example 4: The computer system according to any preceding examples, wherein the processing circuitry is further configured to: receive driver input, and wherein the determination of a suitable trailer drive mode is further based on the driver input.

Example 5: The computer system according to any preceding examples, wherein the processing circuitry is configured to automatically switch to a default trailer drive mode in case of a communication failure with the truck.

Example 6: The computer system according to any preceding examples, wherein the processing circuitry is further configured to include a manual override option that allows the driver to manually set the trailer drive mode.

Example 7: The computer system according to any preceding examples, wherein the processing circuitry is further configured to: receive information pertaining to the load weight of the trailer, and wherein the determination of a suitable trailer drive mode is further based on said information.

Example 8: The computer system according to any preceding examples, wherein the processing circuitry is further configured to: receive information pertaining to vehicle dynamics data of the truck, trailer(s) or a combination of both, and wherein the determination of a suitable trailer drive mode is further based on said information.

Example 9: The computer system according to any preceding examples, wherein the processing circuitry is further configured to: receive information pertaining to the number of trailers in the vehicle combination, and wherein the determination of a suitable trailer drive mode is further based on said information.

Example 10: The computer system according to any preceding examples, wherein the processing circuitry is further configured to: receive information of a battery status of the at least one trailer in the vehicle combination, and wherein the determination of a suitable trailer drive mode is further based on said battery status.

Example 11: The computer system according to any preceding examples, wherein the processing circuitry is configured to: receive predictive maintenance data of the at least one trailer, and wherein the determination of a suitable trailer drive mode is further based on predictive maintenance data.

Example 12: A trailer comprising the computer system of any of Examples 1-11.

Example 13: A computer-implemented method, comprising: obtaining, by processing circuitry of a computer system, information pertaining to a current truck drive mode from a truck; determining, by the processing circuitry, a suitable trailer drive mode, wherein the suitable trailer drive mode is determined among a plurality of predefined trailer drive modes, wherein the determination is based on the obtained current truck drive mode; and setting, by the processing circuitry, a trailer in the determined trailer drive mode.

Example 14: A computer program product comprising program code for performing, when executed by the processing circuitry, the method of Example 13.

Example 15: A non-transitory computer-readable storage medium comprising instructions, which when executed by the processing circuitry, cause the processing circuitry to perform the method of Example 13.

Example 16: The computer system according to any one of examples 1-11, wherein the processing circuitry is configured to send a notification to the truck 12 when the trailer drive mode 120 is set.

Example 17: The computer system according to any one of examples 1-11, wherein the processing circuitry includes a user interface for displaying the trailer drive mode to the driver.

Example 18: The computer system according to any one of examples 1-11, wherein the processing circuitry is further configured to adjust the suspension system of the trailer 14a, 14b based on the determined trailer drive mode 120.

Example 19: The method according to example 13, further comprising obtaining information pertaining to the at least one trailer, and wherein the determination of a suitable trailer drive mode is further based on said information.

Example 20: A vehicle combination comprising a truck and at least one trailer, further comprising the computer system of any one of examples 1 -11, and 16 - 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) for a vehicle combination (10) comprising a truck (12) and at least one trailer (14a, 14b), comprising processing circuitry (702) configured to:
obtain information pertaining to a current truck drive mode (110) from the truck (12),
determine a suitable trailer drive mode (120), wherein the suitable trailer drive mode (120) is determined among a plurality of predefined trailer drive modes (121 - 138), wherein the determination is based on the obtained current truck drive mode (110); and
set the at least one trailer (14a, 14b) in the determined trailer drive mode (120).

2. The computer system (700) according to claim 2, wherein the predefined trailer drive modes (121 - 138) are one or more of: economy mode (121), performance mode (122), range mode (123), standard mode (124), off-road mode (125), hill-start aid mode (126), active grip control mode (127), adaptive cruise control mode (128), I-roll mode (129), I-see mode (130), idle speed driving mode (131), regenerative braking mode (132), rocking mode (133), snow mode (134), battery performance mode (135), load-sensitive mode (136), load balancing mode (136a), heavy load mode (136b), cargo mode (137), refrigerated cargo mode (137a), hazardous cargo mode (137b) and predictive maintenance mode (138).

3. The computer system (700) according to claim 1 or 2, wherein the processing circuitry (702) is further configured to store historical data (140) of the information pertaining to the truck drive mode (110) and use the historical data (140) in determining the suitable trailer drive mode (120).

4. The computer system (700) according to any preceding claims, wherein the processing circuitry (702) is further configured to:
receive a driver input (142), and wherein the determination of a suitable trailer drive mode (120) is further based on the driver input (142).

5. The computer system (700) according to any preceding claims, wherein the processing circuitry (702) is configured to automatically switch to a default trailer drive mode (120) in case of a communication failure with the truck (14a, 14b).

6. The computer system (700) according to any preceding claims, wherein the processing circuitry (702) is further configured to include a manual override option that allows the driver to manually set the trailer drive mode (120).

7. The computer system (700) according to any preceding claims, wherein the processing circuitry (702) is further configured to:
receive information pertaining to a load weight (144) of the trailer (14a, 14b), and wherein the determination of a suitable trailer drive mode (120) is further based on said information pertaining to the load weight (144).

8. The computer system (700) according to any preceding claims, wherein the processing circuitry (702) is further configured to:
receive information pertaining to vehicle dynamics data (149) of the truck (12), trailer(s) (14a, 14b) or a combination of both, and wherein the determination of a suitable trailer drive mode (120) is further based on said information pertaining to vehicle dynamics data (149).

9. The computer system (700) according to any preceding claims, wherein the processing circuitry (702) is further configured to:
receive information pertaining to the number of trailers (146) in the vehicle combination, and wherein the determination of a suitable trailer drive mode (120) is further based on said information pertaining to the number of trailers (146).

10. The computer system (700) according to any preceding claims, wherein the processing circuitry (702) is further configured to:
receive information pertaining to a battery status (141) of the at least one trailer (14a, 14b) in the vehicle combination (10), and wherein the determination of a suitable trailer drive mode (120) is further based on said information pertaining to the battery status (141).

11. The computer system (700) according to any preceding claims, wherein the processing circuitry (702) is configured to:
receive predictive maintenance data (148) of the at least one trailer (14a, 14b), and wherein the determination of a suitable trailer drive mode (120) is further based on predictive maintenance data (148).

12. A trailer (14a, 14b) comprising the computer system (700) of any of claims 1-11.

13. A computer-implemented method (200), comprising:
obtaining (210), by processing circuitry (702) of a computer system (700), information pertaining to a current truck drive mode (110) from a truck (12);
determining (220), by the processing circuitry (702), a suitable trailer drive mode (120), wherein the suitable trailer drive mode (120) is determined among a plurality of predefined trailer drive modes (121 - 137), wherein the determination is based on the obtained current truck drive mode (110); and
setting (230), by the processing circuitry (702), a trailer (14a, 14b) in the determined trailer drive mode (120).

14. A computer program product comprising program code for performing, when executed by the processing circuitry (702), the method (200) of claim 13.

15. A non-transitory computer-readable storage medium comprising instructions, which when executed by the processing circuitry (702), cause the processing circuitry (702) to perform the method (200) of claim 13.
